# EUROPEAN PATENT SPECIFICATION

(11) **EP 2 087 818 B1**
(45) Date of publication and mention of the grant of the patent: **20.04.2011**
(21) Application number: 08101453.2
(22) Date of filing: 08.02.2008
(51) Int. Cl.: A47J 31/06, A47J 31/36

(54) **Filter holder for a coffee machine**
Filterhalter für eine Kaffeemaschine
Support de filtre pour machine à café

(43) Date of publication of application: 12.08.2009
(73) Proprietor: Celaya, Emparanza y Galdos Internacional, S.A., 01013 Vitoria Alava (ES)
(72) Inventor: Madina Aguirre, Aitor, 01013 Vitoria Alava (ES)
(74) Representative: ZBM Patents

(56) References cited:
- EP-A- 0 097 129
- EP-A- 0 663 172
- DE-A1- 19 832 063
- US-A- 6 021 706
- US-A1- 2004 103 796

## Description

The present invention relates to a filter holder for a coffee machine, and to a coffee machine comprising said filter holder, particularly an espresso coffee machine, the filter holder comprising a main body, a filter-ejector for filtering brewed coffee and ejecting coffee grounds that can axially slide inside the main body, and a height adjusting mechanism that comprises a first cam adapted to engage and raise the filter-ejector upon an initial, or first, relative rotation between the latter and the former, in order to reduce the volume of the coffee powder to be brewed. The height adjusting mechanism can be swapped, for example, between a two-coffee position, in which the filter-ejector is at a low height, and a one-coffee position, in which the filter-ejector is at a higher level, thus reducing the volume available for the coffee powder in the filter holder.

### BACKGROUND ART

Such a filter holder is intended to work in an espresso coffee maker, in which hot water is supplied at 15 bar or more, whereby the filter-ejector should be firm enough at any height to support such a strong pressure and to get a good coffee cream.

Document US6021706 discloses a filter holder including a cup provided with a handle and designed to hold a filter that consists of a housing and a perforated bottom wall and is movably mounted in the space defined by the housing via a height adjustment device. This device includes a stack consisting of at least one crown adjacent to the bottom wall and a counter-crown coaxial with said crown. The cooperating surfaces of the crown and the counter-crown face each other and include a succession of alternate ramps and flats, as well as an actuating member movably mounted on the cup and adapted to give rise to an angular displacement in relative rotation between the crown and the counter-crown, so as to cause the perforated bottom to occupy different positions in height in the housing. A separate ejection device for ejection the coffee grounds comprises a button that, when pushed, causes pivoting of a lever which, through the linear displacement of its opposite end, can upwardly drive the perforated bottom. The button-lever and the actuating member are different elements, and they act differently on the perforated bottom.

Document US 2004/0103796 discloses a filter holder having a height adjustment device similar to that of US6021706 but with the actuating member in the form of a button, the turning of which provides a selection between two heights for the perforated bottom, and an ejection device comprising the same button but now intended to be pushed instead of turned, said button being axially linked to the perforated bottom, so that by pushing the button the perforated bottom is upwardly driven and the coffee grounds can be ejected. The button must then develop both a rotating movement and a translating movement, which somewhat complicates the mechanism.

Document DE 19832063A1 discloses an espresso brewing head unit comprising a filter plate, a filter carrier, a cam element arranged below said filter carrier, a coffee receptacle receiving the structure of the head unit, a handle attached to said coffee receptacle and an operating mechanism arranged in said handle. The cam element comprises a first set of ramps and a second set of ramps, respectively corresponding to complementary shaped ramp surfaces of the filter carrier, and a toothed rim which engages with a rack provided in the handle. Said rack is actuated by a slide member arranged in the handle. The slide member and the rack move linearly, making the cam element to rotate.

### SUMMARY OF THE INVENTION

It is an object of the present invention to provide a filter holder in which the ejection and height adjusting mechanisms are strengthened and simplified, while allowing easy ejection and cleaning.

According to a first aspect of the invention, the filter holder comprises a second cam that is adapted to engage and further raise the filter-ejector upon a subsequent, or second, relative rotation between the latter and the former, in order to eject the coffee grounds after a coffee has been brewed said second cam being located substantially below the first cam. In this way, with one homogeneous rotation movement, albeit divided in an initial and a subsequent rotation, which are normally coplanar, all the operating positions (one-coffee position, two-coffee positions and ejection position) of the filter holder can be rotatably reached.

In an embodiment, both the first and the second cams can be rotated with respect to the main body, around an axis parallel to that of the main body, whereas the filter-ejector can be only axially displaced. This is achieved by, for example, designing the filter-ejector to comprise an ejector keyed to an upwardly protruding cylinder of a lower part of the main body by means of a pin. Advantageously, said pin is also the follower of the second cam.

In any case, a rotation of the cams is transformed in a lineal displacement of the filter-ejector.

The first cam can advantageously be fixed to the second cam, or alternatively both cams can be integrally formed. In this way, all the operating positions of the filter holder can be reached by means of the same rotating mechanism.

In an embodiment, the filter-ejector comprises a crown-like lower surface adapted to engage with a corresponding upper surface of the first cam.

More particularly, the crown-like lower surface of the filter-ejector has a plurality of downwardly inclined convexities adapted to engage with corresponding downwardly inclined convexities of the upper surface of the first cam, so that, once the initial relative rotation of the first cam and the filter-ejector has been completed, the engagement between said downwardly inclined convexities of the crown-like lower surface of the filter-ejector and said corresponding downwardly inclined convexities of the upper surface of the first cam prevents said first relative rotation from being readily reversed.

In an embodiment, the filter-ejector can be supported, through three of said convexities of its crown-like lower surface, by three corresponding convexities of the first cam, the convexities of both sets being spaced 120°. This ensures a robust support for the filter-ejector in the one-coffee position.

Preferably, both the first cam and the second cam can be rotatably actuated around their axes by an actuating lever. Said actuating lever angularly acts on the first and second cams, so as to rotatably drive them with little effort. Particularly, since force is rotatably transmitted to the filter-ejector, coffee grounds can readily be ejected even when they are dry after staying for a long time in the filter.

In an embodiment, the angular length of the travel path of the lever is of about 90°, so the total rotation of the cams is of about 90°, roughly divided in 45° for each cam (i.e., first and second rotation).

Preferably, the filter holder comprises a lower body for dispensing the coffee that is provided with a flange in order to facilitate the extraction of said lower body for cleaning it.

According to a further aspect of the invention, a coffee maker comprises a filter holder according to some of the features described in this section.

### BRIEF DESCRIPTION OF THE DRAWINGS

A particular embodiment of the present invention will be described in the following, only by way of non-limiting example, with reference to the appended drawings, in which:
figure 1 is a perspective view of a filter holder;
figure 2 is a vertical cross-section view taken along plane A-A of figure 1;
figure 3 is an enlarged detail of figure 2;
figure 4 is similar to figure 3 but in a different operative position;
figure 5 is similar to figures 3 and 4 but in yet a different operative position;
figure 6 is a schematic view of a first cam and a crown-like cam follower in the operative position of figure 3;
figure 7 is similar to figure 6 but in the operative position of figure 4;
figure 8 is a schematic view of the guiding of a pin on a second cam;
figure 9 is an exploded view of the first and second cams; and
figure 10 is a vertical cross-section view of the arrangement of an ejector.

A list of the used reference numerals is given presently; the preferred material for some elements is mentioned in parentheses.
1- Filter holder main body (Aluminium)
1.1- Upper part of the main body
1.2- Lower part of the main body
1.2.1- Protruding cylinder
1.2.1.1- Axial groove
2- Handle (Nylon)
3- Lower cam (Polyoxide methylene)
3.1- Fastener
4- Upper cam (Polyoxide methylene)
4.1- Recess
5- Filter-ejector
5.1- Ejector (Polyoxide methylene)
5.1.1- Axial rib
5.2- Filter (Stainless steel)
5.3- Foam-generating valve (Brass)
5.4- Seal (Silicone)
6- Spring (Stainless steel)
7- Pin (Stainless steel)
8- Actuating lever
8.1- Lever (Stainless steel)
8.2- Knob (Polybutylene terephtalate)
9- Coffee dispenser (Polybutylene terephtalate)
9.1- Flange

### DESCRIPTION OF PARTICULAR EMBODIMENTS

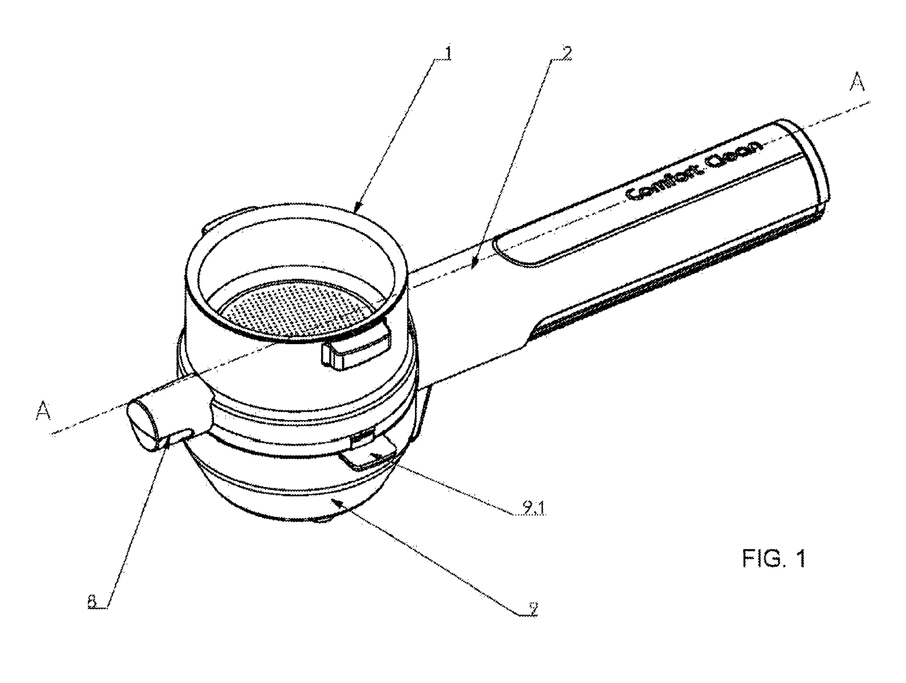

The filter holder of the figures basically comprises (fig. 1) a main body 1, a handle 2 and a coffee dispenser body 9. Said coffee dispenser body 9 includes one flange 9.1 to facilitate its extraction in order to allow the filter holder to be cleaned.

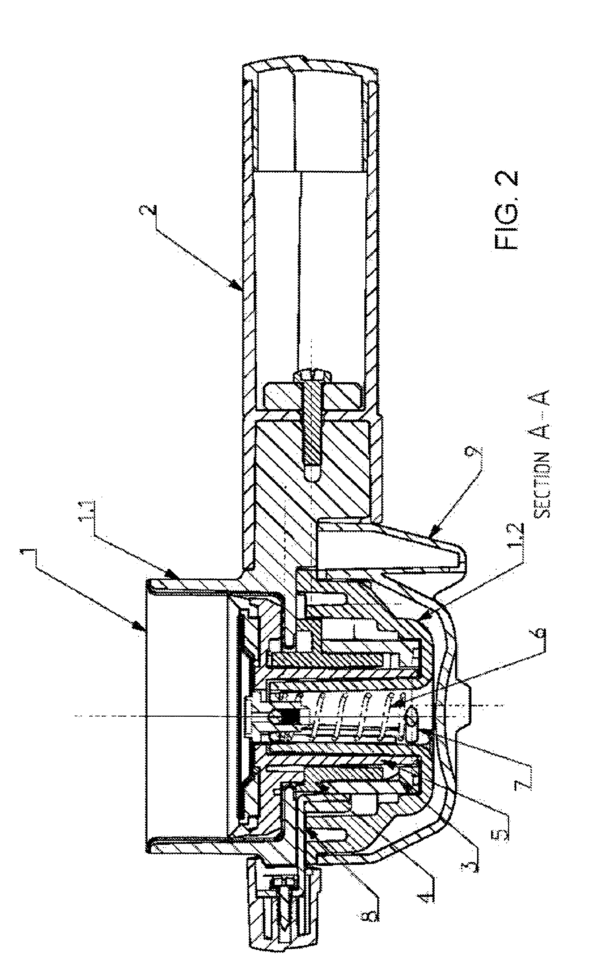

As shown in figure 2, the main body 1 has an upper part 1.1 and a lower part 1.2. The lower part 1.2 encloses a lower cam 3, an upper cam 4, an actuating lever for rotating the cams 3 and 4 around an axis parallel to that of the main body, a filter-ejector 5 whose axis is the rotation axis of the cams 3 and 4, a spring 6 axially (and normally downwardly) urging the filter-ejector 5, and a pin 7 that keys the filter-ejector 5 to a corresponding axial keyway provided on the lower part 1.2 of the main body 1, so as to transform a rotation of the cams 3 and 4 into an axial translation of the filter-ejector 5, since the cams can only be rotated and the filter-ejector can only be axially displaced.

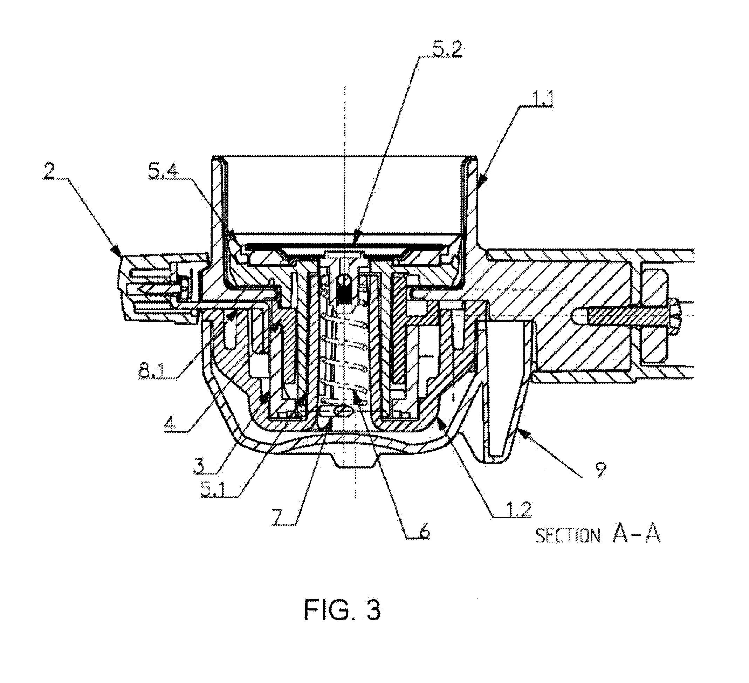

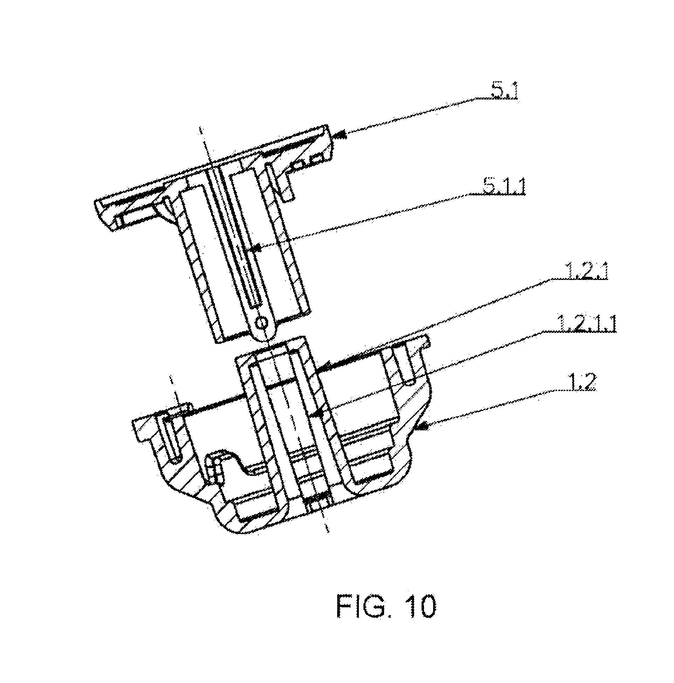

As shown in figures 3 and 10, the filter-ejector 5 comprises an ejector 5.1 and a filter 5.2 fixed to each other; the filter 5.2 is not really enclosed by the lower part 1.2 but it is enclosed by the upper part 1.1 and can axially slide inside it. The lower part 1.2 comprises an upwardly centrally protruding cylinder 1.2.1 having two axial grooves 1.2.1.1 that guide two corresponding axial ribs 5.1.1 provided on the inside of the ejector 5.1. The ejector 5.1 is keyed to the protruding cylinder 1.2.1 by means of the pin 7, which passes through the ejector 5.1 and outwardly projects from it..

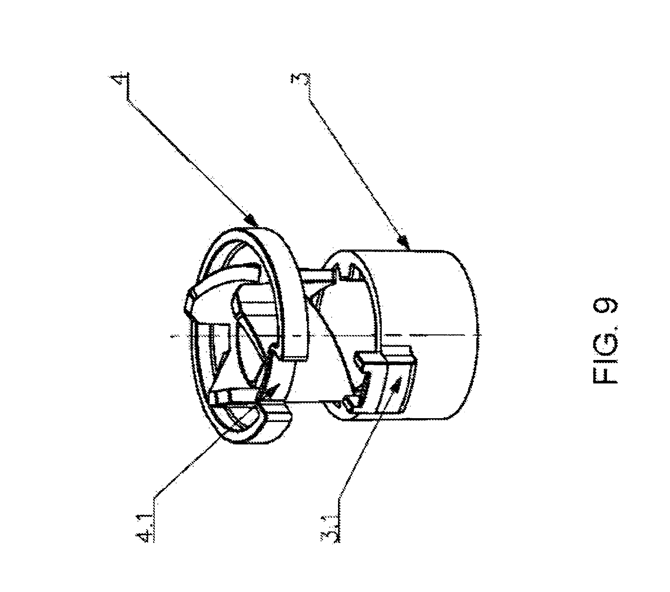

As shown in figures 3 and 9, the lower cam 3 has a fastener 3.1 to be fastened to a corresponding recess 4.1 of the upper cam 4, so that the two cams can be fixed to each other. Said linking between the two cams 3 and 4 leaves an opening adapted to receive a lever 8.1 of an actuating lever 8, which also comprises a knob 8.2 to actuate a rotation on the two linked cams 3 and 4 via said lever 8.1.

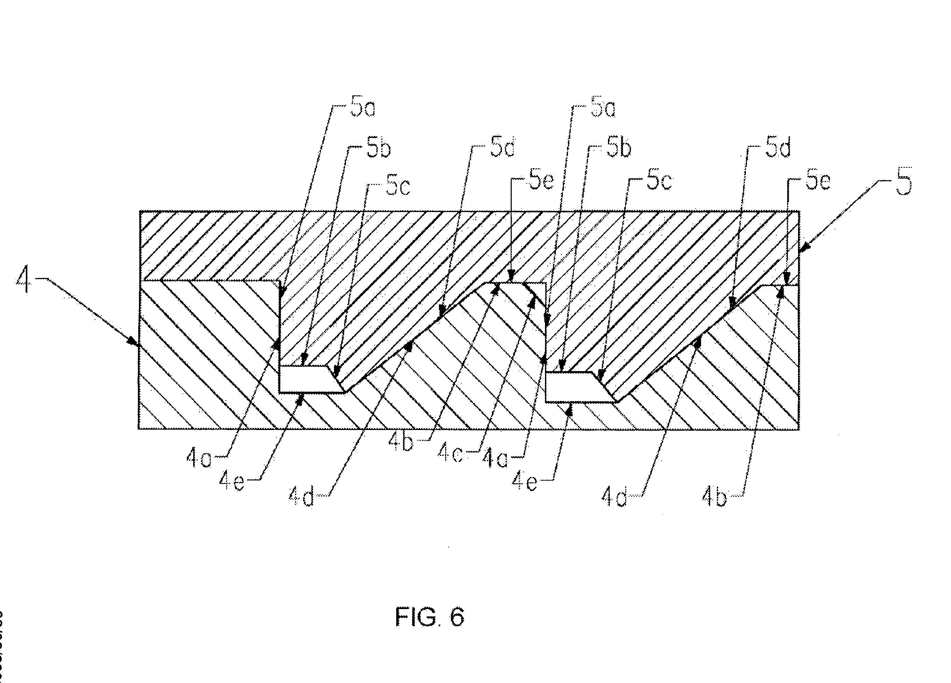

The operating position shown in figure 3 is a two-coffee position, meaning that the filter 5.2 is at its minimum height and the volume for coffee powder encompassed by the upper part 1.1 is largest. This arrangement is schematically shown in figure 6, in which the upper cam 4 is seen as a surface formed by a plurality of concavities and convexities 4a-4b-4c-4d-4e, among which a plurality of ramps 4d provides the camming function of the upper cam 4. In figure 6, a crown-like lower surface 5a-5b-5c-5d-5e of the filter-ejector 5 is seen as fitting the surface 4a-4b-4c-4d-4e of the upper cam 4, thus making the filter 5.2 to be at is lowest height; said crown-like lower surface 5a-5b-5c-5d-5e is thus the follower of the upper cam 4.

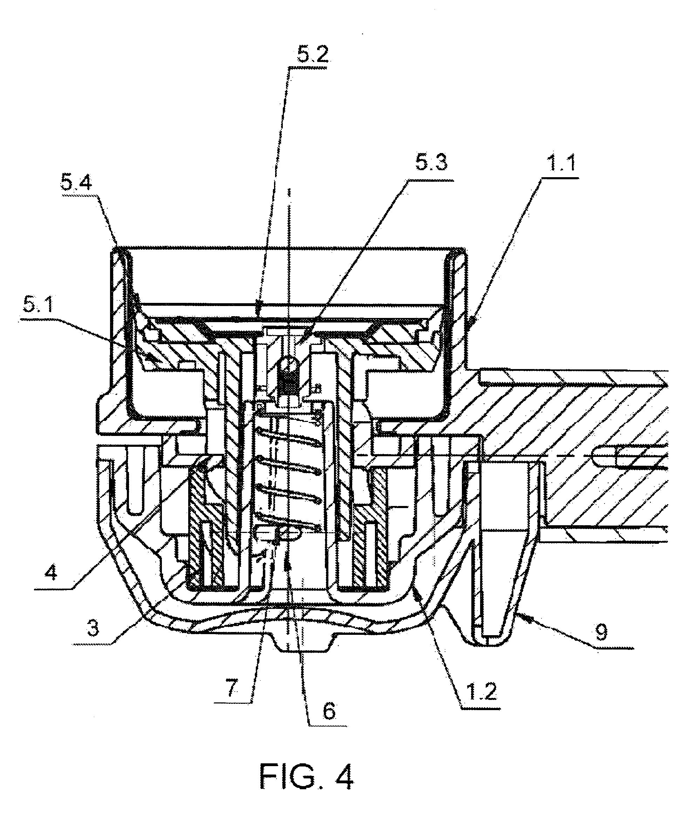

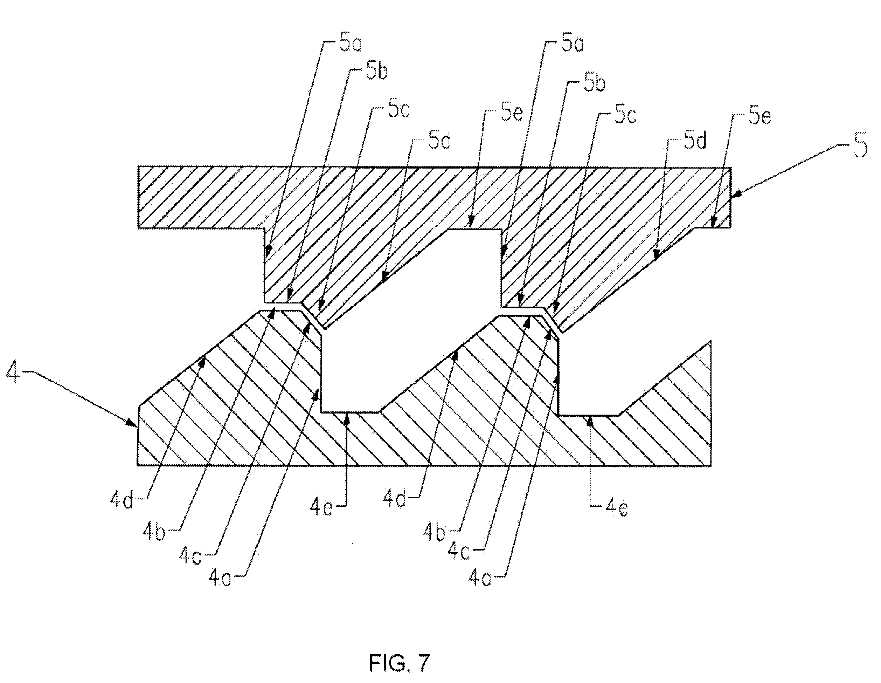

Upon driving the actuating lever 8, the upper cam 4 is forced to perform a first rotation during which it engages the filter-ejector 5. During this first rotation the filter-ejector surfaces 5d are raised on the cam surfaces 4d by virtue of the keying of the filter-ejector 5 to the main body 1, until surfaces 5b are resting on surfaces 4b; this is the one-coffee position shown in figures 4 and 7 and correspond to a higher height of filter 5.2, a height that defines a one-coffee powder volume. The filter-ejector 5 is reliably supported by three surfaces 4b-4c angularly spaced by 120°.

In other words, in figure 7 the convexities 4b-4c of the upper cam 4 are engaging the convexities 5b-5c of the crown-like lower surface of the filter-ejector 5, and the latter is in a high position and supported by said convexities 4b-4c, while in figure 6 the convexities 4d-4b-4a of the upper cam 4 are engaging the concavities 5d-5e-5a of the crown-like lower surface of the filter-ejector 5, and vice versa, so that the filter-ejector 5 is in a low position.

In the arrangement shown in figure 7, the engagement between the downwardly inclined convexities 4c and 5c prevents said first rotation from being readily reversed, since said engagement is a locking engagement. In fact, in this position the spring 6 is downwardly urging the filter-ejector 5, thus strengthening said engagement. Of course, by applying a somewhat stronger inverse force to the actuating lever 8 said locking engagement can be superseded and the first rotation can be reversed, whereby the two-coffee position of figure 6 can be reached again.

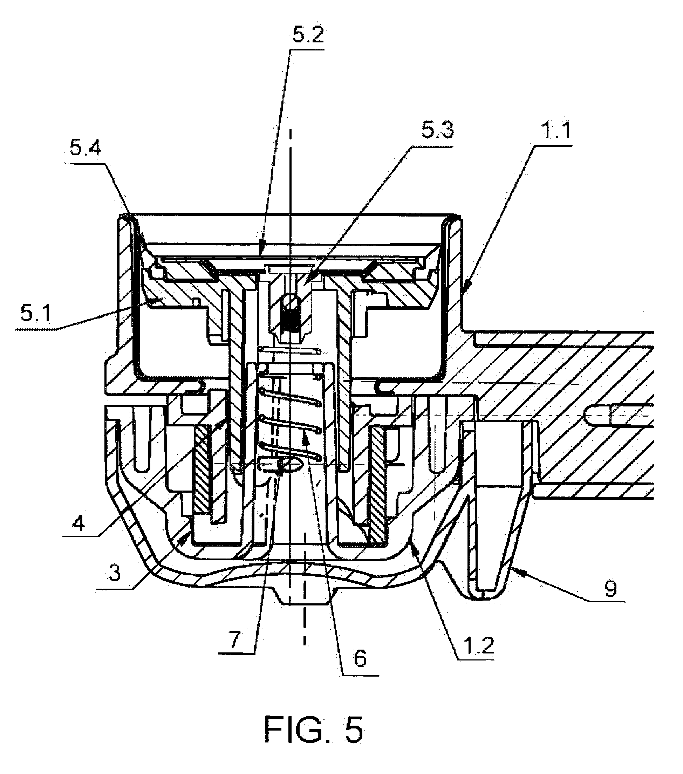

A second rotation can be performed from the one-coffee position of the filter-ejector 5, by driving the actuating lever 8 further on. During this second rotation the acting cam is the lower cam 3; that is why the lower cam 3 can also be termed second cam and the upper cam 4 can be termed first cam. Figure 5 shows the operating position after completion of the second rotation; this operating position is an ejecting position of the ejector 5.1 and the filter 5.2, so as to eject the coffee grounds after a coffee has been brewed. In this position the filter 5.2 reaches its maximum height. During the second rotation the pin 7 is the follower of the lower cam 3, and the crown-like lower surface 5a-5b-5c-5d-5e of the filter-ejector 5 is taken off the surface 4a-4b-4c-4d-4e of the upper cam 4 and does not interact with it.

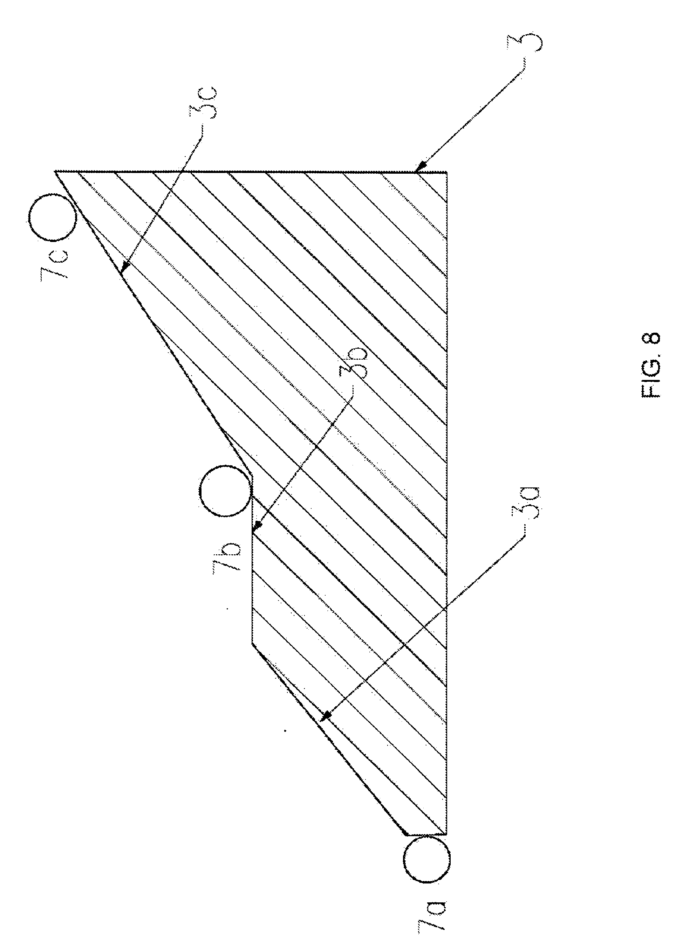

As schematically shown in figure 8, the lower cam 3 comprises two ramps 3a and 3c and a flat side 3b. The two-coffee position of the filter-ejector is indicated by the location 7a of the pin 7; during the first rotation of the cams the pin 7 goes up the ramp 3a, although this is not an engaging ramp because there is no effective interaction between the pin 7 and the ramp 3a. The one-coffee locked position is indicated by the location 7b of the pin 7; during the second rotation of the cams the pin 7 is engaged by the ramp 3c of the lower cam 3, thus further raising the ejector 5.1 to eject the coffee grounds.

Therefore, just by driving the actuating lever any operating position of the filter-ejector 5 can be reached: the one-coffee position, the two-coffee position, and the ejection position. This is made possible by the two-cam fixed arrangement of lower cam 3 and upper cam 4. The upper or first cam 4 provides height adjusting mechanism, and the lower or second cam 3 provides an ejection mechanism, both of them being rotatably and homogeneously operated.

Both the first and the second rotation are of about 45°, so that the angular distance between the two-coffee position and the ejection position is of about 90°.

A seal 5.4, preferably a silicone ring, is arranged between the filter-ejector 5 and the main body 1, so that the brewing chamber defined by them is sealed. A foam-generating valve 5.3 is placed under the filter 5.2; such a valve is described, for example, in patent EP169047.

The filter holder of the invention is compatible with encapsulated coffee according to the standard E.S.E. (Easy Serving Espresso), set and launched by Illy.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For example, the cams 3 and 4 can be made integral, as a single piece.

## Claims

1. Filter holder for a coffee machine comprising a main body (1), a filter-ejector (5) for filtering brewed coffee and ejecting coffee grounds that can axially slide inside the main body (1), and a first cam (4) adapted to engage and raise the filter-ejector (5) upon an initial relative rotation between the latter and the former, in order to reduce the volume of the coffee powder to be brewed, **characterized in that** it also comprises a second cam (3) that is adapted to engage and further raise the filter-ejector (5) upon a subsequent relative rotation between the latter and the former, in order to eject the coffee grounds after a coffee has been brewed, said second cam (3) being located substantially below the first cam (4).

2. Filter holder according to claim 1, wherein both the first cam (4) and the second cam (3) can be rotated with respect to the main body (1).

3. Filter holder according to claim 1 or 2, wherein the first cam (4) is fixed to the second cam (3).

4. Filter holder according to claim 1 or 2, wherein the first cam (4) is integral with the second cam (3).

5. Filter holder according to any of the preceding claims, wherein the filter-ejector (5) comprises an ejector (5.1) which is keyed to an upwardly protruding cylinder (1.2.1) of a lower part (1.2) of the main body (1) by means of a pin (7).

6. Filter holder according to claim 5, wherein said pin (7) is the follower of the second cam (3).

7. Filter holder according to any of the preceding claims, wherein the filter-ejector (5) comprises a crown-like lower surface (5a, 5b, 5c, 5d, 5e) adapted to engage with a corresponding upper surface (4a, 4b, 4c, 4d, 4e) of the first cam (4).

8. Filter holder according to claim 7, wherein the crown-like lower surface of the filter-ejector (5) has a plurality of downwardly inclined convexities (5c) adapted to engage with corresponding downwardly inclined convexities (4c) of the upper surface of the first cam (4), so that, once the initial relative rotation of the first cam (4) and the filter-ejector (5) has been completed, the engagement between said downwardly inclined convexities (5c) of the crown-like lower surface of the filter-ejector (5) and said corresponding downwardly inclined convexities (4c) of the upper surface of the first cam (4) prevents said first relative rotation from being readily reversed.

9. Filter holder according to claim 7 or 8, wherein the filter-ejector (5) can be supported, through three convexities (5b-5c) of its crown-like lower surface, by three corresponding convexities (4b-4c) of the first cam (4), the convexities of both sets being spaced 120°.

10. Filter holder according to any of the preceding claims, wherein both the first cam (4) and the second cam (3) can be rotatably actuated around their axes by an actuating lever (8).

11. Filter holder according to claim 10, wherein the angular length of the travel path of said lever (8) is of substantially 90°.

12. Filter holder according to any of the preceding claims, which comprises a lower body (9) for dispensing the coffee that is provided with a flange (9.1) in order to facilitate the extraction of said lower body (9) for cleaning it.

13. Coffee maker comprising a filter holder according to any of claims 1 to 12.

## Patentansprüche

1. Filterhalter für eine Kaffeemaschine mit einem Hauptgehäuse (1), einem Filter-Auswurf (5) zum Filtern gebrühten Kaffees und Auswerfen des gemahlenen Kaffees, der axial im Hauptgehäuse (1) gleiten kann, und einem ersten Nocken (4), der dafür ausgelegt ist, den Filter-Auswurf (5) einzuhaken und nach einer anfänglichen Drehbewegung des Letzteren bezüglich des Ersteren anzuheben, damit das Volumen des zu brühenden Kaffeepulvers reduziert wird, **dadurch gekennzeichnet, dass** er weiterhin einen zweiten Nocken (3) besitzt, der dafür ausgelegt ist, den Filter-Auswurf (5) einzuhaken und nach einer weiteren Drehbewegung des Letzteren bezüglich des Ersteren weiter anzuheben, um den gemahlenen Kaffee nach dem Brühen des Kaffees auszuwerfen, wobei sich der besagte zweite Nocken (3) im Wesentlichen unterhalb des ersten Nocken (4) befindet.

2. Filterhalter nach Anspruch 1, bei dem sowohl der erste Nocken (4) als auch der zweite Nocken (3) bezüglich des Hauptgehäuses (1) gedreht werden können.

3. Filterhalter nach Anspruch 1 oder 2, bei dem der erste Nocken (4) fest am zweiten Nocken (3) angebracht ist.

4. Filterhalter nach Anspruch 1 oder 2, bei dem der erste Nocken (4) im zweiten Nocken (3) integriert ist.

5. Filterhalter nach einem der vorstehenden Ansprüche, bei dem der Filter-Auswurf (5) einen Auswurf (5.1) besitzt, der Mittels eines Stiftes (7) mit einem nach oben hervorragenden Zylinder (1.2.1) eines Unterteils (1.2) des Hauptgehäuses (1) verkeilt ist.

6. Filterhalter nach Anspruch 5, bei dem der besagte Stift (7) der Folger des ersten Nockens (3) ist.

7. Filterhalter nach einem der vorstehenden Ansprüche, bei dem der Filter-Auswurf (5) eine kranzartige Unterseite (5a, 5b, 5c, 5d, 5e) besitzt, die dafür ausgelegt ist, in eine entsprechende Oberseite (4a, 4b, 4c, 4d, 4e) des ersten Nocken (4) zu greifen.

8. Filterhalter nach Anspruch 7, bei dem die kranzähnliche Unterseite des Filter-Auswurfs (5) eine Vielzahl von nach unten geneigten Ausbuchtungen (5c) besitzt, die dafür ausgelegt sind, in die entsprechenden nach unten geneigten Ausbuchtungen (4c) der Oberseite des ersten Nocken (4) zu greifen, so dass nach der Vollendung der anfänglichen relativen Drehbewegung des ersten Nockens (4) und des Filter-Auswurfs (5) das Ineinandergreifen der besagten nach unten geneigten Ausbuchtungen (5c) der kranzartigen Unterseite des Filter-Auswurfs (5) und der besagten entsprechenden nach unten geneigten Ausbuchtungen (4c) der Oberseite des ersten Nockens (4) verhindert, dass die besagte erste relative Drehbewegung mit Leichtigkeit umgekehrt wird.

9. Filterhalter nach Anspruch 7 oder 8, bei dem der Filter-Auswurf (5) durch drei Ausbuchtungen (5b-5c) seiner kranzartigen Unterseite mittels dreier entsprechender Ausbuchtungen (4b-4c) des ersten Nocken (4) gehalten werden kann, wobei die Ausbuchtungen der beiden Teile in 120°-Winkeln zueinander angeordnet sind.

10. Filterhalter nach einem der vorstehenden Ansprüche, bei dem sowohl der erste Nocken (4) als auch der zweite Nocken (3) durch Betätigung eines Schalthebels (8) zur Drehung um ihre Achsen veranlasst werden können.

11. Filterhalter nach Anspruch 10, bei dem der Öffnungswinkel des vom besagten Hebel (8) zurückgelegten Weges im Wesentlichen 90° beträgt.

12. Filterhalter nach einem der vorstehenden Ansprüche, der ein unteres Gehäuseteil (9) für die Kaffeabgabe besitzt, das mit einem Flansch (9.1) versehen ist, um das Herausnehmen des besagten unteren Gehäuseteils (9) zu dessen Reinigung zu erleichtern.

13. Kaffeemaschine, die einen Filterhalter nach einem der Ansprüche 1 bis 12 besitzt.

## Revendications

1. Porte-filtre pour une machine à café comprenant un corps principal (1), un éjecteur de filtre (5) destiné à filtrer le café préparé et éjecter le marc de café lequel peut glisser en sens axial à l'intérieur du corps principal (1), et une première came (4) adaptée pour venir en prise avec, et lever, l'éjecteur de filtre (5) lors d'une rotation relative initiale entre ce dernier et le premier, afin de réduire le volume de la poudre de café destinée à être infusée, **caractérisé en ce qu'**il comprend également une deuxième came (3) qui est adaptée pour venir en prise avec et lever encore l'éjecteur de filtre (5) lors d'une rotation relative ultérieure entre ce dernier et le premier, afin d'éjecter le marc de café après qu'un café a été préparé, ladite deuxième came (3) étant située sensiblement en dessous de la première came (4).

2. Porte-filtre selon la revendication 1, dans lequel tant la première came (4) que la deuxième came (3) peuvent être tournées par rapport au corps principal (1).

3. Porte-filtre selon la revendication 1 ou 2, dans lequel la première came (4) est fixée à la deuxième came (3).

4. Porte-filtre selon la revendication 1 ou 2, dans lequel la première came (4) est solidaire de la deuxième came (3).

5. Porte-filtre selon l'une quelconque des revendications précédentes, dans lequel l'éjecteur de filtre (5) comprend un éjecteur (5.1) qui est adapté à un cylindre faisant saillie vers le haut (1.2.1) d'une partie inférieure (1.2) du corps principal (1) au moyen d'une goupille (7).

6. Porte-filtre selon la revendication 5, dans lequel ladite goupille (7) est le galet suiveur de la deuxième came (3).

7. Porte-filtre selon l'une quelconque des revendications précédentes, dans lequel l'éjecteur de filtre (5) comprend une surface inférieure de type couronne (5a, 5b, 5c, 5d, 5e) adaptée pour venir en prise avec une surface supérieure correspondante (4a, 4b, 4c, 4d, 4e) de la première came (4).

8. Porte-filtre selon la revendication 7, dans lequel la surface inférieure de type couronne de l'éjecteur de filtre (5) a une pluralité de convexités inclinées vers le bas (5c) adaptées pour venir en prise avec des convexités inclinées vers le bas (4c) correspondantes de la surface supérieure de la première came (4), de sorte que, une fois que la rotation relative initiale de la première came (4) et de l'éjecteur de filtre (5) a été achevée, la mise en prise entre lesdites convexités inclinées vers le bas (5c) de la surface inférieure de type couronne de l'éjecteur de filtre (5) et lesdites convexités inclinées vers le bas (4c) correspondantes de la surface supérieure de la première came (4) empêche ladite première rotation relative d'être aisément inversée.

9. Porte-filtre selon la revendication 7 ou 8, dans lequel l'éjecteur de filtre (5) peut être supporté, via trois convexités (5b-5c) de sa surface inférieure de type couronne, par trois convexités (4b-4c) correspondantes de la première came (4), les convexités de l'un et l'autre ensembles étant espacées de 120°.

10. Porte-filtre selon l'une quelconque des revendications précédentes, dans lequel tant la première came (4) que la deuxième came (3) peuvent être actionnées de façon pouvant pivoter autour de leurs axes par un levier d'actionnement (8).

11. Porte-filtre selon la revendication 10, dans lequel la longueur angulaire de la voie de déplacement dudit levier (8) est sensiblement de 90°.

12. Porte-filtre selon l'une quelconque des revendications précédentes, qui comprend un corps inférieur (9) de distribution de café qui est pourvu d'une bride (9.1) afin de faciliter l'extraction dudit corps inférieur (9) pour le nettoyer.

13. Machine à café comprenant un porte-filtre selon l'une quelconque des revendications 1 à 12.
